# EUROPÄISCHE PATENTSCHRIFT

(11) **EP 2 718 475 B1**
(45) Veröffentlichungstag und Bekanntmachung des Hinweises auf die Patenterteilung: **09.09.2020**
(21) Anmeldenummer: 12727134.4
(22) Anmeldetag: 31.05.2012
(51) Int. Cl.: F16D 69/02, C23C 4/10, F16D 65/12, C22C 29/08

(54) **SPRITZPULVER AUF WOLFRAMKARBID BASIS**
TUNGSTEN-CARBIDE-BASED SPRAY POWDER
POUDRE À PULVÉRISER À BASE DE CARBURE DE TUNGSTÈNE

(30) Priorität: 10.06.2011 WO PCT/EP2011/059740
(43) Veröffentlichungstag der Anmeldung: 16.04.2014
(73) Patentinhaber: Oerlikon Metco WOKA GmbH, 36456 Barchfeld (DE)
(72) Erfinder: REISEL, Guido, 36448 Schweina (DE); OECHSLE, Manfred, 65239 Hochheim am Main (DE)
(74) Vertreter: Intellectual Property Services GmbH
(86) Internationale Anmeldenummer: PCT/EP2012/060300
(87) Internationale Veröffentlichungsnummer: WO 2012/168139

(56) Entgegenhaltungen:
- EP-A1- 1 126 043
- WO-A1-2010/089047
- DE-A1-102007 043 138
- DE-A1-102009 008 114
- GB-A- 1 385 479
- JP-A- 2004 300 528
- US-A- 5 458 460
- P Chivavibul: "Effects of carbide size and Co content on the microstructure and mechanical properties of HVOF-sprayed WC-Co coatings", Surface & Coating Technology, 27 June 2007 (2007-06-27), pages 509-521, XP055573131, DOI: https://doi.org/10.1016/j.surfcoat.2007.06 .026 Retrieved from the Internet: URL:https://www.sciencedirect.com/science/ article/pii/S0257897207006469?via=ihub [retrieved on 2019-03-22]

## Beschreibung

Die Erfindung betrifft ein Spritzpulver auf Wolframkarbid Basis und ein Verfahren zur Herstellung eines solchen Spritzpulvers zum thermischen Beschichten eines Substrats, insbesondere zum thermischen Beschichten einer Bremsscheide eines Fahrzeugs mit einer thermischen Spritzschicht auf Wolframkarbid Basis, und ein Verfahren zur Herstellung einer thermischen Spritzschicht gemäss dem Oberbegriff der unabhängigen Ansprüche der jeweiligen Kategorie.

In der EP 1 126 043 A1 und JP 2004 300528 A sind bereits derartige Spritzpulver beschrieben.

Durch thermisches Spritzen aufgebrachte Beschichtungen sind seit langem für eine Vielzahl von Anwendungen bekannt. So werden zum Beispiel Oberflächen von Öl geschmierten Zylinderlaufflächen in Fahrzeugmotoren bereits seit einiger Zeit unter anderem durch Plasmaspritzen beschichtet, wobei die Schicht vor allem den Reibungskoeffizienten, der zwischen Kolbenringen und Zylinderwand wirksam ist, deutlich reduziert, so dass der Verschleiss von Kolbenringen und Zylinder deutlich zurückgeführt wird, was zu einer Erhöhung der Laufleistung des Motors, einer Verlängerung der Wartungsintervalle, zum Beispiel beim Ölwechsel und nicht zuletzt zu einer merklichen Leistungssteigerung des Motors führt.

Weitere typische Anwendungen für durch thermisches Spritzen aufgebrachte Oberflächen ist das Beschichten von Turbinenteilen mit Verschleissschutz- und Wärmedämmschichten, von Komponenten von Öl oder trocken geschmierten Lagern, wie z.B. die Beschichtung von Kurbellagern oder anderen Werkstücken, die besonderen physikalischen, chemischen oder thermischen Belastungen ausgesetzt sind. Je nach dem welchen Zweck die Schicht zu erfüllen hat, kommen ganz bestimmte Werkstoffe, in der Regel in Form von Spritzpulvern oder Spritzdrähten zum Einsatz, die die notwendigen spezifischen Eigenschaften und Zusammensetzung besitzen, um die erforderlichen Eigenschaften der zu spritzenden Oberflächenschicht zu generieren.

Ein anderes Anwendungsbeispiel ist das Vorsehen einer Reibfläche auf einem Substrat, die gerade dem umgekehrten Zweck dient und die Reibung zwischen dem Substrat und einem mit dem Substrat in Kontakt bringbaren Reibpartner erhöhen soll, wobei gleichzeitig das Substrat selbst gegen Verschleiss bzw. Beschädigung geschützt werden soll.

So ist es z.B. bereits aus der DE 43 21 713 A1 bekannt, Bremsscheiben für Fahrzeuge mit einer thermischen Spritzschicht zu versehen, um einerseits die Bremswirkung beim Abbremsen des Fahrzeugs zu erhöhen und gleichzeitig das Substrat, also die Bremsscheibe selbst vor direktem Verschleiss zu schützen und damit nicht zuletzt die Lebensdauer der Bremsscheibe zu erhöhen.

Dabei sind in den letzten Jahren die Anforderungen an die Bremssysteme insbesondere im Automobilbau aber auch z.B. im Luftfahrtbereich ständig gestiegen. Die Bremssysteme müssen auch relativ schwere Fahrzeuge oder Flugzeuge, zudem auch von hohen Geschwindigkeit und unter widrigen Bedingungen, wie Aquaplaning, kontrolliert und zuverlässig abbremsen können. Das stellt hohe Anforderungen z.B. an die Haftzugfestigkeit der Reibbeschichtungen auf den Bremsscheiben, aber auch an physikalische Kenngrössen wie die Mikrohärte und die Makrohärte, die thermische Stabilität der Eigenschaften der Reibbeläge usw.. Dabei sollen die Reibschichten allein schon aus wirtschaftlichen Gründen relativ einfach und möglichst mit etablierten Methoden herstellbar sein und die für die Schichten zu verwendenden Materialien in ihrer chemischen Zusammensetzung einfach aufgebaut und mit vergleichsweise geringem Aufwand herstellbar sein. Ausserdem sollen die Reibschichten gleichzeitig eine hohe Lebensdauer aufweisen, also im Betrieb möglichst wenig mechanisch verschleissen und daneben auch ausreichend resistent gegen die beim Bremsen sehr hohe Wärmeentwicklung sein und auch gegen chemische Angriffe, wie z.B. gegen Korrosion möglichst widerstandsfähig sein, so dass lange Wartungs- bzw. Erneuerungsintervalle realisierbar sind.

Die aus dem Stand der Technik bekannten Lösungen können dabei in der Regel immer nur einen bestimmten, oder höchstens einige wenige der vorgenannten Aspekte optimieren, wobei bei anderen Eigenschaften Kompromisse gemacht werden müssen.

Um diese Nachteile zumindest teilweise ausgleichen zu können, sind zum Teil recht aufwändige Beschichtungsverfahren mit komplizierten Schichtsystemen auf den Bremsscheiben vorgeschlagen worden. So wir in der DE 10 2009 008 114 A1 eine Bremsscheibe mit einer Wolframkarbid basierten Beschichtung vorgeschlagen, wobei die die mittels eines thermischen Spritzverfahrens aufgebrachte Wolframkarbid Beschichtung mittels Carborieren, Oxidieren, Gasnitrokarborieren oder einem anderen Gas- oder Plasma basierten Verfahren nachbehandelt werden muss.

Die Nachbehandlung ist dabei zwingend notwendig, um eine oberflächennahe Härtung der Reibfläche zu erzielen, indem durch das Eindiffundieren der Atome aus der Plasma- bzw. Gasphase eine verschleissfeste und korrosionsbeständig gehärtete Oberflächenschicht gebildet wird.

Dieses Verfahren ist naturgemäss sehr aufwändig, da nach dem thermischen Beschichten der Bremsscheiben noch zwingend ein Gasbehandlungsverfahren nachgeschaltet werden muss, was die Herstellung unnötig verkompliziert und teuer macht.

Die Aufgabe der Erfindung ist es daher, ein thermisches Spritzpulver zum thermischen Beschichten eines Substrats bereitzustellen, mit welchem unter Verwendung an sich bekannter thermischer Spritzverfahren thermisch gespritzte Schichten hergestellt werden können, die besonders vorteilhaft als Reibschichten auf Bremsscheiben, zum Beispiel von Land- oder Luftfahrzeugen aller Art vorgesehen werden können und bei welchen dabei alle wesentlichen Anforderungsmerkmale der Schicht gleichzeitig optimiert sind. Dabei soll die Herstellung im Vergleich zum Stand der Technik wesentlich vereinfacht werden und die Zahl der notwendigen Verfahrensschritte in der Herstellung auf ein Minimum reduziert werden.

Des Weiteren ist es eine Aufgabe der Erfindung ein Verfahren zur Herstellung eines entsprechenden Spritzpulvers, sowie ein thermisches Spritzverfahren zur Herstellung entsprechender thermischer Spritzschichten bereitzustellen.

Die diese Aufgaben lösenden Gegenstände der Erfindung sind durch die Merkmale der unabhängigen Ansprüche der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Spritzpulver auf Wolframkarbid Basis zum thermischen Beschichten eines Substrats, welches Spritzpulver, abgesehen von Verunreinigungen, WC im Bereich von 60 % bis 75 % Gewichtsprozent, Cr₃C₂ im Bereich von 14 % bis 22 % Gewichtsprozent, und Ni im Bereich von 11 % bis 23 % Gewichtsprozent enthält und wobei eine Partikelgrösse des Primärkarbids WC und Cr₃C₂ im Bereich von 0.5 µm bis 4 µm liegt.

Es ist eine wesentliche Erkenntnis der Erfindung, dass durch die Verwendung eines erhöhten Nickelgehalts im Spritzpulver, der zwischen ca. 11% und 23% Gewichtsprozent liegt, z.B. eine Reibfläche auf einer Bremsscheibe herstellbar ist, die auch ohne Nachbehandlung unter anderem eine ausreichende Korrosionsfestigkeit und Härte hat. Das ist der entscheidende Vorteil gegenüber Spritzpulvern, wie sie z.B. aus der DE 10 2009 008 114 A1 bekannt sind, bei deren Verwendung nach dem Aufspritzen der Reibschicht zwingend eine Nachbehandlung notwendig ist.

In einem bevorzugten Ausführungsbeispiel liegt dabei der Anteil an WC im Spritzpulver im Bereich von 63 % bis 70 % Gewichtsprozent, bevorzugt bei 67 % Gewichtsprozent.

Der Anteil an Cr₃C₂ im Spritzpulver wird bevorzugt im Bereich von 17 % bis 19 % Gewichtsprozent, im Speziellen bei 18 % Gewichtsprozent gewählt, wobei der Anteil an Ni im Spritzpulver im Bereich von 13 % bis 20 % Gewichtsprozent, bevorzugt bei 15 % Gewichtsprozent liegen kann.

Eine nominelle Partikelgrösse des Spritzpulvers liegt dabei bevorzugt im Bereich von -45µm bis +11µm, insbesondere im Bereich von -45µm bis +20µm liegt. Wobei die zuvor benutzte Nomenklatur für die Partikelgrösse in der für den Fachmann gewohnten Weise zu verstehen ist. So bedeutet wie üblich zum Beispiel eine Partikelgrösse Bereich von -45µm bis +11µm, dass die Partikel grösser als 11µm und kleiner als 45µm sind.

Dabei kann das erfindungemässe Spritzpulver ausser den genannten technisch wesentlichen chemischen Bestandteilen Wolframkarbid (WC), Chromkarbid (Cr₃C₂), und Nickel (Ni) als technisch messbare Verunreinigungen noch bis zu 0.5 % Gewichtsprozent Fe Verunreinigungen und / oder höchstens noch die im folgenden, unter der Abkürzung TAO (Total All Other) zusammengefassten chemischen Elemente als Verunreinigungen enthalten: Na, Mg, AI, Si, K, Ca, Ti, V, Mn, Co, Cu, Zn, Ge, Rb, Sr, Y, Zr, Nb, Mo, Rh, Pd, Cd, In, Sn, Hf, Ta, TI, Pb.

Der Gesamtanteil an TAO Verunreinigungen beträgt dabei ebenfalls maximal 0.5 % Gewichtsprozent, so dass in einem erfindungsgemässen Spritzpulver zusätzlich zu den technisch wesentlichen chemischen Bestandteilen Wolframkarbid (WC), Chromkarbid (Cr₃C₂), und Nickel (Ni) maximal 1% Gewichtsprozent, eigentlich unerwünschte Verunreinigungen enthalten sein können, nämlich maximal 0.5 % Gewichtsprozent Fe und insgesamt maximal 0.5 % Verunreinigungen aus der Gruppe der Elemente, die oben durch die Abkürzung TAO definiert wurde. Es versteht sich, dass im Idealfall keinerlei Verunreinigungen, also weder Fe noch ein Element aus der TAO Gruppe in einem erfindungsgemässen Spritzpulver enthalten ist, was aber in der Praxis kaum zu realisieren ist.

Fe kann dabei in der Praxis z.B. insbesondere zwischen 0.05 % und 0.5 % Gewichtsprozent im Spritzpulver der vorliegenden Erfindung vorhanden sein, ohne einen für die Erfindung technisch wesentlichen Einfluss auf die Eigenschaften der mit einem solchen Spritzpulver gespritzten Schichten zu zeigen. Solange der Gehalt an Fe Verunreinigungen nicht grösser als 0.5 % Gewichtsprozent ist, ist insbesondere die notwendige Korrosionsbeständig der mit dem Spritzpulver zu spritzenden Schicht zuverlässig sichergestellt. Und auch die übrigen Schichteigenschaften wie z.B. Porosität, Mikro- und Makrohärte oder auch z.B. die Haftzugfestigkeit der mit dem erfindungsgemässen Spritzpulver gespritzten Schichten werden durch eine derart geringe Fe Verunreinigung bzw. durch die anderen unter TAO zusammengefassten Verunreinigungen praktisch nicht beeinflusst.

Für die genannten, an sich unerwünschten Verunreinigungen, die in einem erfindungsgemässen Spritzpulver vorkommen können, kann es ganz verschiedene Ursachen geben, die sich oft mit einem vertretbaren technischen Aufwand nicht vermeiden lassen aber für alle praktischen Zwecke auch nicht vermieden werden müssen, weil Verunreinigungen in der oben genannten Grössenordnung, wie bereits erwähnt, praktisch keinerlei Einfluss auf die technisch relevanten Eigenschaften eines erfindungsgemässen Spritzpulvers bzw. einer damit thermisch gespritzten Spritzschicht haben.

Kobalt (Co) kann beispielweise neben Fe mit bis zu fast 0.5% Gewichtsprozent, in der Praxis bis zu 0.05 %, 0.1 % oder zwischen 0.1 % und fast 0.5 % Gewichtsprozent vorkommen, da Co neben WC z.B. in den Hartmetallkugeln enthalten sein kann, mit denen die Rohstoffe bei der Herstellung des erfindungsgemässen Spritzpulvers in an sich bekannter Weise gemahlen werden. Auch können die bei der Herstellung des Spritzpulvers verwendeten Rohstoffe in geringen Mengen Verunreinigungen enthalten, so z.B. Tantal (Ta). Die Verunreinigungen können dabei sowohl durch die wesentlichen chemischen Rohstoffe Wolframkarbid (WC), Chromkarbid (Cr₃C₂), und Nickel (Ni) in den Herstellungsprozess eingeführt werden, oder können auch z.B. durch einen bei der Herstellung des Pulvers verwendeten Binder, Entschäumer, durch Werkzeuge, Prozesskammern usw. oder auf andere dem Fachmann bekannte Weise ungewollt in den Herstellungsprozess eingebracht werden und damit letztlich das Spritzpulver in unwesentlichem Masse, wie oben angegeben kontaminieren.

Die Erfindung betrifft dabei weiter ein Verfahren zur Herstellung eines erfindungsgemässen Spritzpulvers, welches Verfahren die folgenden, im Einzelnen an sich bekannten Verfahrensschritte umfasst:
Bereitstellung der Primärkarbide WC, Cr₃C₂, sowie Ni und Herstellung eines Pulvergemischs aus den vorgenannten Komponenten, das abgesehen von den oben bereits ausführlich diskutierten möglichen Verunreinigungen nur aus WC im Bereich von 60 % bis 75 % Gewichtsprozent, Cr₃C₂ im Bereich von 14 % bis 22 % Gewichtsprozent und Ni im Bereich von 11 % bis 23 % Gewichtsprozent besteht. Die Standard Partikelgrösse der vorgenannten Primärkarbide, die als Ausgangstoffe zur Herstellung eines erfindungsgemässen Spritzpulvers dienen können, liegt dabei im Bereich von 0.5 µm bis 4 µm, im Speziellen bei 2µm bis 3µm, besonders bevorzugt bei 2.5 µm, wobei natürlich auch andere Primärkarbide mit davon abweichenden Partikelgrössen vorteilhaft verwendet werden können.

Es hat sich dabei gezeigt, dass kleine Partikelgrössen der Primärkarbide im Bereich von ca. 0.5 µm bis 4 µm insbesondere das Abrasionsverhalten und damit das Verschleissverhalten, insbesondere von Bremsscheiben massiv positiv beeinflussen. Solche kleine Primärkarbid Partikel verteilen sich nämlich sehr gleichmässig und homogen in der gespritzten Schicht und sind gleichzeitig sehr eng zueinander in der Schicht angeordnet und bilden daher in der Schicht ein dichtes Verteilungsmuster von Primärkarbid Partikeln. Werden z.B. bei gleichem Masseanteil dagegen grössere Primärpartikel verwendet, so sind diese weniger dicht, weniger gleichmässig und weniger homogen in der Schicht verteilt, was dazu führt, dass bei mechanischer Beanspruchung der Schicht, beispielweise im Fall von Bremsscheiben beim Bremsvorgang, die Spritzschicht zur Furchenbildung neigt, wodurch ein vorzeitiger Verschleiss begünstigt wird. Ausserdem hat sich gezeigt, dass die Mikrohärte der Schichten bei kleinen Primärpartikelgrössen deutlich verbessert werden kann im Vergleich zu Schichten, die mit deutlich grösseren Primärkarbid gespritzt wurden.

Aus dem Pulvergemisch, einem Liquid, insbesondere Lösungsmittel wie beispielweise Iso-Hexan oder einem anderen an sich bekannten geeigneten Lösungsmittel, und zusätzlich bevorzugt einem oder mehreren Additiven, das zum Beispiel ein Binder und / oder ein Entschäumer und / oder ein anderes aus der Pulverherstellung dem Fachmann an sich bekanntes Additiv sein kann, wird sodann eine Suspension hergestellt und die Suspension homogenisiert.

Aus der homogenisierten Suspension wird durch Sprühtrocknen ein Pulverkuchen, insbesondere Agglomerate hergestellt, bevorzugt mit Verdichten des getrockneten Gemischs, und anschliessendem sintern des bevorzugt verdichteten Gemischs. Der gesinterte Pulverkuchen wird schliesslich zu einem Pulvermaterial gebrochen und / oder gemahlen.

Abhängig von der konkreten Anwendung wird das Pulvermaterial schliesslich durch Auswahl einer vorgegebenen Korngrössenverteilung mittels eines Klassierungsverfahrens klassiert und kann dann für die vorgesehene Anwendung, z.B. zur thermischen Beschichtung einer Bremsscheibe für ein Fahrzeug verwendet werden.

In der folgenden Tabelle 1 ist exemplarisch eine chemische Zusammensetzung eines besonders bevorzugtes Ausführungsbeispiel eines erfindungsgemässen Spritzpulvers angegeben, dass sich in Tests hervorragend bewährt hat. Alle Prozent Angaben sind dabei Gewichtsprozent.

**Tabelle 1: Chemische Zusammensetzung eines erfindungsgemässen Spritzpulver.**

| C | Ni | Cr | Co | Fe | W |
|---|---|---|---|---|---|
| 6.29 % | 15.03% | 14.93 % | 0.15 % | 0.08 % | Rest |

In Tabelle 2 ist die Korngrössenverteilung des Spritzpulvers gemäss Tabelle 1 in µm angegeben. Dabei bedeutet wie üblich beispielsweise "0.47 % im Bereich -63+53", dass 0.47 % der Körner des klassierten Pulvers grösser als 53µm und kleiner als 63µm sind, also 0.47 % der Korngrössen im Bereich zwischen 53µm und 63µm liegen.

**Tabelle 2: Korngrössenverteilung des Spritzpulvers gemäss Tabelle 1.**

| **µm** | **Gew. %** |
|---|---|
| +63 | 0.00 |
| -63+53 | 0.47 |
| -53 +45 | 4.88 |
| -45 +20 | 81.61 |
| -20 | 13.04 |

Bevorzugt kann das Spritzpulver benutzt werden zur Herstellung eines Substrats mit einer thermischen Spritzschicht auf Wolframkarbid Basis, wobei gemäss der vorliegenden Erfindung die thermische Spritzschicht, abgesehen von Verunreinigungen, WC im Bereich von 60 % bis 75 % Gewichtsprozent, Cr₃C₂ im Bereich von 14 % bis 22 % Gewichtsprozent, und Ni im Bereich von 11 % bis 23 % Gewichtsprozent enthält. Das Substrat ist dabei bevorzugt eine Bremsscheibe für ein Fahrzeug, z.B. für ein Land- oder Luftfahrzeug, wobei das Substrat aber auch ein anderes Substrat sein kann, dass mit einem Reibbelag versehen werden muss.

Dabei kann die Spritzschicht des Substrats ausser den genannten technisch wesentlichen chemischen Bestandteilen Wolframkarbid (WC), Chromkarbid (Cr₃C₂), und Nickel (Ni) als technisch messbare Verunreinigungen auch noch die bereits bei der Beschreibung des Spritzpulvers genannten Verunreinigungen, also bis zu ungefähr 0.5 % Gewichtsprozent Fe Verunreinigungen und / oder höchstens noch die im folgenden, unter der Abkürzung TAO zusammengefassten chemischen Elemente als Verunreinigungen enthalten: Na, Mg, AI, Si, K, Ca, Ti, V, Mn, Co, Cu, Zn, Ge, Rb, Sr, Y, Zr, Nb, Mo, Rh, Pd, Cd, In, Sn, Hf, Ta, TI, Pb.

Zusätzlich zu diesen Verunreinigungen, die natürlich von den entsprechenden Verunreinigungen des Spritzpulvers herrühren, kann die thermische Spritzschicht eines Substrats noch bis zu ungefähr 1 % Gewichtsprozent Sauerstoff (O) enthalten, der beim Spritzvorgang, zum Beispiel durch Oxidation einer oder mehrerer Komponenten des Spritzpulver oder auf andere Weise in die Spritzschicht gelangen und dort gebunden werden kann. Im Speziellen kann der Sauerstoffgehalt zwischen 0.1 % und 0.5 %, bzw. zwischen 0.5 % bis 1 % Gewichtsprozent liegen.

Ja nachdem welches Spritzverfahren zur Erzeugung der Spritzschicht gewählt wird, können auch weitere marginale Verunreinigungen durch den Spritzvorgang selbst in die Schicht gelangen. So ist es zum Beispiel möglich, dass bei Verwendung eines HVOF Verfahrens, bei welchem zur Erzeugung der thermischen Energie beispielsweise Kerosin oder ein anderer organischer oder anorganischer Brennstoff verbrannt werden kann, dass zusätzlich Kohlenstoff aus dem Brennstoff in einer Menge bis zu ca. maximal 0.1 % Gewichtsprozent in die Schicht gelangen kann.

Der Gesamtanteil an TAO Verunreinigungen in der Spritzschicht beträgt dabei ebenfalls ungefähr maximal 0.5 % Gewichtsprozent, so dass in einer Spritzschicht zusätzlich zu den technisch wesentlichen chemischen Bestandteilen Wolframkarbid (WC), Chromkarbid (Cr₃C₂), und Nickel (Ni) maximal etwas mehr als 2% Gewichtsprozent, eigentlich unerwünschte Verunreinigungen enthalten sein können, abgesehen von marginalen Verunreinigungen nämlich maximal 0.5 % Gewichtsprozent Fe und insgesamt maximal 0.5 % Verunreinigungen aus der Gruppe der Elemente, die oben durch die Abkürzung TAO definiert wurde, sowie maximal noch bis zu 1% Sauerstoff, und eventuell zusätzlich bis zu 0.1 % zusätzlicher Kohlenstoff, abhängig vom Spritzverfahren.

Fe kann dabei in der Praxis z.B. insbesondere ungefähr zwischen 0.05 % und 0.5 % Gewichtsprozent in der Spritzschicht eines Substrats der vorliegenden Erfindung vorhanden sein, ohne einen für die Erfindung technisch wesentlichen Einfluss auf die Eigenschaften der gespritzten Schichten zu zeigen. Solange der Gehalt an Fe Verunreinigungen nicht grösser als 0.5 % Gewichtsprozent ist, ist insbesondere die notwendige Korrosionsbeständig der Spritzschicht zuverlässig sichergestellt. Und auch die übrigen Schichteigenschaften wie z.B. Porosität, Mikro- und Makrohärte oder auch z.B. die Haftzugfestigkeit der Spritzschichten werden durch eine derart geringe Fe Verunreinigung bzw. durch die anderen unter TAO zusammengefassten Verunreinigungen und auch durch den eventuell beim Spritzvorgang in der Schicht gebundenen Sauerstoff oder zusätzlichen Kohlenstoff praktisch nicht beeinflusst.

Kobalt (Co) kann dabei beispielweise neben Fe mit bis zu fast 0.5% Gewichtsprozent, in der Praxis bis zu ungefähr 0.05 %, 0.1 % oder zwischen 0.1 % und fast 0.5 % Gewichtsprozent vorkommen.

Es versteht sich, dass im Idealfall keinerlei Verunreinigungen, also weder Fe noch ein Element aus der TAO Gruppe noch Sauerstoff, Kohlenstoff oder eine andere Verunreinigung in einer erfindungsgemässen Spritzschicht enthalten ist, was aber in der Praxis kaum zu realisieren ist.

In einem für die Praxis besonders wichtigen Anwendungsfall wird die thermische Spritzschicht mit einem Hochgeschwindigkeits-Flammspritzverfahren (HVOF, High Velocity Oxygen Fuel) hergestellt, wobei jedoch im Prinzip auch jedes andere an sich bekannte thermische Spritzverfahren, wie ein anderes Flammspritzverfahren, Kaltgasspritzen, Plasmaspritzen oder ein anderes thermisches Spritzverfahren vorteilhaft zum Einsatz kommen kann.

Eine nach dem erfindungsgemässen Verfahren gergestellte Spritzschicht hat dabei im Vergleich zum Stand der Technik eine deutlich verbesserte Mikrohärte, die im Speziellen z.B. um 50 HV 0.3 höher ist, als andere aus dem Stand der Technik bekannte Spritzschichten, die beispielsweise für Bremsscheiben bekannt sind. D.h., die Mikrohärte einer thermischen Spritzschicht gemäss der vorliegenden Erfindung liegt im Bereich von 1000 bis 1200 HV 0.3, bevorzugt zwischen 1100 und 1200 HV 03, im speziellen bei 1160 HV 0.3.

Auch die Makrohärte solcher erfindungsgemäss hergestellter Spritzschichten ist deutlich besser als die bekannter Schichten und kann z.B. mindestens 1 bis 2 Einheiten (Makrohärtenskala HR 15N) höher liegen, so dass eine Makrohärte einer thermischen Spritzschicht hergestellt mit dem erfinderischen Verfahren der Erfindung bevorzugt im Bereich von 90 bis 93 HR 15N liegt. Darüber hinaus konnte auch eine Haftzugfestigkeit der erfindungsgemäss hergestellten thermischen Spritzschichten deutlich verbessert werden und liegt besonders bevorzugt im Bereich von 65 MPa bis 75 MPa und liegt damit um mindestens 5 MPA höher als die Zugfestigkeit von entsprechenden aus dem Stand der Technik bekannter Spritzschichten.

Eine Porosität der thermischen Spritzschicht hergestellt gemäss der vorliegenden Erfindung liegt vorteilhaft im Bereich von 0.5 % bis 1.5 % Volumenprozent, bevorzugt bei 1 % Volumenprozent, so dass die Porosität gegenüber bekannten Spritzschichten um mindestens 1 % Volumenprozent reduziert werden konnte, also im Vergleich zum stand der Technik um ca. mindestens die Hälfte reduziert ist.

Die erfindungsgemäss hergestellten Spritzschichten zeichnen sich neben den bereits genannten Verbesserungen insbesondere durch weniger Fehlstellen aus, so dass die erfindungsgemäss hergestellten Spritzschichten eine viel geringere Anfälligkeit für Unterkorrosion, eine deutlich erhöhte Duktilität und im Vergleich mit bekannten Spritzschichten eine viel kleineres Risiko für Rissbildungen in der Schicht zeigen.

All das führt in der Summe letztlich dazu, dass eine weitere Nachbehandlung, wie sie im Stand der Technik z.B. gemäss DE 10 2009 008 114 A1 zwingend notwendig ist, bei den erfindungsgemäss hergestellten Schichten völlig entfallen kann.

Die Erfindung betrifft schliesslich ein Verfahren zur Herstellung einer thermischen Spritzschicht auf einem Substrat umfassend die folgenden Verfahrensschritte: Bereitstellung eines erfindungsgemässen Spritzpulvers gemäss der vorliegenden Beschreibung. Bereitstellung eines Substrats, insbesondere Bremsscheiben Rohling für ein Fahrzeug. Beschichten des Substrats mittels eines thermischen Spritzverfahrens, bevorzugt mittels eines HVOF Verfahrens unter Verwendung eines Spritzpulvers der vorliegenden Erfindung. Dabei werden bei einem erfindungsgemässen Verfahren die Prozessparameter beim thermischen Spritzen derart gewählt, dass auf dem Substrat eine Abscheidungseffizienz im Bereich von 60 % bis 65 %, bevorzugt zwischen 50 % und 55 % erreicht wird.

## Patentansprüche

1. Spritzpulver auf Wolframkarbid Basis zum thermischen Beschichten eines Substrats, wobei das Spritzpulver, abgesehen von Verunreinigungen, WC im Bereich von 60 % bis 75 % Gewichtsprozent, Cr₃C₂ im Bereich von 14 % bis 22 % Gewichtsprozent, und Ni im Bereich von 11 % bis 23 % Gewichtsprozent enthält, **dadurch gekennzeichnet, dass** eine Partikelgrösse des Primärkarbids WC und Cr₃C₂ im Bereich von 0.5 µm bis 4 µm liegt.

2. Spritzpulver nach Anspruch 1, wobei der Anteil an WC im Spritzpulver im Bereich von 63 % bis 70 % Gewichtsprozent, bevorzugt bei 67 % Gewichtsprozent liegt.

3. Spritzpulver nach einem der Ansprüche 1 oder 2, wobei der Anteil an Cr₃C₂ im Spritzpulver im Bereich von 17 % bis 19 % Gewichtsprozent, bevorzugt bei 18 % Gewichtsprozent liegt.

4. Spritzpulver nach einem der vorangehenden Ansprüche, wobei der Anteil an Ni im Spritzpulver im Bereich von 13 % bis 20 % Gewichtsprozent, bevorzugt bei 15 % Gewichtsprozent liegt.

5. Spritzpulver nach einem der vorangehenden Ansprüche, wobei eine nominelle Partikelgrösse des Spritzpulvers im Bereich von -45µm bis +11 µm, insbesondere im Bereich von -45µm bis +20µm liegt und / oder wobei eine Partikelgrösse der Primärkarbide im Bereich von 2µm bis 3µm, bevorzugt bei 2.5 µm liegt.

6. Verfahren zur Herstellung eines Spritzpulvers nach einem der vorangehenden Ansprüche, umfassend die folgenden Verfahrensschritte:
- Bereitstellung von WC, Cr₃C₂, und Ni und Herstellung eines Pulvergemischs, das abgesehen von Verunreinigungen aus WC im Bereich von 60 % bis 75 % Gewichtsprozent, Cr₃C₂ im Bereich von 14 % bis 22 % Gewichtsprozent und Ni im Bereich von 11 % bis 23 % Gewichtsprozent besteht;
- Herstellung einer Suspension umfassend das Pulvergemisch, ein Lösungsmittel, und ein Additiv und Homogenisieren der Suspension;
- Herstellung eines Pulverkuchens, insbesondere Aggolemerate durch Sprühtrocknen der Suspension;
- Sintern des Pulverkuchens;
- Brechen und / oder Mahlen des gesinterten Pulverkuchens zu einem Pulvermaterial;
- Bereitstellung des Spritzpulvers durch Auswahl einer vorgegebenen Korngrössenverteilung mittels eines Klassierungsverfahrens, **dadurch gekennzeichnet, dass** eine Partikelgrösse des Primärkarbids WC und Cr₃C₂ im Bereich von 0.5 µm bis 4 µm liegt.

7. Verfahren nach Anspruch 6, wobei das Lösungsmittel Iso-Hexan ist und das Additiv ein Binder und / oder ein Entschäumer ist.

8. Verfahren zur Herstellung einer thermischen Spritzschicht auf einem Substrat, umfassend die folgenden Verfahrensschritte:
- Bereitstellung eines Spritzpulvers nach einem der Ansprüche 1 bis 5;
- Bereitstellung eines Substrats, insbesondere Bremsscheiben Rohling für ein Fahrzeug;
- Beschichten des Substrats mittels eines thermischen Spritzverfahrens, bevorzugt mittels eines HVOF Verfahrens unter Verwendung des Spritzpulvers.

## Claims

1. A spray powder on a tungsten carbide basis for the thermal coating of a substrate, wherein the spray powder includes, apart from impurities, WC in the range of 60 % to 75 % by weight, Cr₃C₂ in the range of 14 % to 22 % by weight, and Ni in the range of 11 % to 23 % by weight, **characterized in that** the particle size of the primary carbide WC and Cr₃C₂ is the range from 0.5 µm to 4 µm.

2. A spray powder in accordance with claim 1, wherein the portion of WC in the spray powder lies in the range of 63 % to 70 % by weight, preferably at 67 % by weight.

3. A spray powder in accordance with one of the claims 1 or 2, wherein the portion of Cr₃C₂ in the spray powder lies in the range of 17 % to 19 % by weight, preferably at 18 % by weight.

4. A spray powder in accordance with any one of the preceding claims, wherein the portion of Ni in the spray powder lies in the range of 13 % to 20 % by weight, preferably at 15 % by weight.

5. A spray powder in accordance with any one of the preceding claims, wherein a nominal particle size of the spray powder lies in the range of -45 µm to +11 µm, in particular in the range of -45 µm to +20 µm, and/or wherein a particle size of the primary carbide lies in the range of 2 µm to 3 µm, particularly preferably at 2.5 µm.

6. A method for the manufacture of a spray powder in accordance with any one of the preceding claims, including the following method steps:
- provision of WC, Cr₃C₂ and Ni and manufacture of a powder mixture, which is composed of, apart from impurities, WC in the range of 60 % to 75 % by weight, Cr₃C₂ in the range of 14 % to 22 % by weight, and Ni in the range of 11 % to 23 % by weight;
- manufacture of a suspension including the powder mixture, a solvent, and an additive; -
- homogenization of the suspension;
- manufacture of a powder cake, in particular agglomerates, by spray drying of the suspension;
- sintering the powder cake;
- breaking and/or grinding of the sintered powder cake to a powder material;
- provision of the spray powder through selection of a predefined seed size distribution by means of a classification method,
**characterized in that** the particle size of the primary carbide WC and Cr₃C₂ is the range from 0.5 µm to 4 µm.

7. A method in accordance with claim 6, wherein the solvent is iso-hexane, and the additive is a binder and/or an antifoaming agent.

8. A method for the manufacture of a thermal spray layer on a substrate, comprising the following method steps:
- provision of a spray powder in accordance with any one of the claims 1 to 5;
- provision of a substrate, in particular a brake disc blank for a vehicle;
- coating of the substrate by means of a thermal spray method, preferably by means of an HVOF method on use of the spray powder.

## Revendications

1. Une poudre de pulvérisation à base de carbure de tungstène pour le revêtement thermique d'un substrat, dans laquelle la poudre de pulvérisation contient, outre des impuretés, du WC dans la gamme de 60 % à 75 % en poids, du Cr₃C₂ dans la gamme de 14 % à 22 % en poids, et du Ni dans la gamme de 11 % à 23 % en poids, **caractérisé en ce qu'**une taille des particules du carbure primaire WC et Cr₃C₂ est comprise dans la gamme de 0,5 µm à 4 µm.

2. Une poudre de pulvérisation selon la revendication 1, dans laquelle la proportion de WC dans la poudre de pulvérisation est comprise dans la gamme de 63 % à 70 % en poids, de préférence 67 % en poids.

3. Une poudre de pulvérisation selon l'une des revendications 1 ou 2, dans laquelle la proportion de Cr₃C₂ dans la poudre de pulvérisation est comprise dans la gamme de 17 % à 19 % en poids, de préférence 18 % en poids.

4. Une poudre de pulvérisation selon l'une des revendications précédentes, dans laquelle la proportion de Ni dans la poudre de pulvérisation est comprise dans la gamme de 13 % à 20 % en poids, de préférence 15 % en poids.

5. Une poudre de pulvérisation selon l'une des revendications précédentes, dans laquelle une taille de particule nominale de la poudre de pulvérisation est comprise dans la gamme de -45 µm à +11 µm, en particulier dans la gamme de -45 µm à +20 µm et / ou dans laquelle une taille de particule des carbures primaires est comprise dans la gamme de 2 µm à 3 µm, de préférence 2,5 µm.

6. Un procédé de production d'une poudre de pulvérisation selon l'une des revendications précédentes, comprenant les étapes de procédé suivantes :
- Fourniture du WC, du Cr₃C₂ et du Ni, et produire un mélange de poudre, qui contient, outre les impuretés, du WC dans la gamme de 60 % à 75 % en poids, du Cr₃C₂ dans la gamme de 14 % à 22 % en poids, et du Ni dans la gamme de 11 % à 23 % en poids ;
- Production d'une suspension comprenant le mélange de poudre, un solvant et un additif, et homogénéisation de la suspension ;
- Production d'un gâteau de poudre, notamment d'agglomérats par séchage par pulvérisation de la suspension ;
- Frittage du gâteau de poudre ;
- Concassage et / ou broyage du gâteau de poudre fritté en une matière pulvérulente ;
- Fourniture de la poudre de pulvérisation en sélectionnant une distribution granulométrique prédéterminée au moyen d'un processus de classification, **caractérisé en ce qu'**une taille des particules du carbure primaire WC et Cr₃C₂ est comprise dans la gamme de 0,5 µm à 4 µm.

7. Un procédé selon la revendication 6, dans lequel le solvant est de l'iso-hexane et l'additif est un liant et / ou un antimousse.

8. Un procédé de production d'un revêtement par pulvérisation thermique sur un substrat, comprenant les étapes de procédé suivantes :
- Fourniture d'une poudre de pulvérisation selon l'une des revendications 1 à 5 ;
- Fourniture d'un substrat, en particulier d'une ébauche de disque de frein pour un véhicule ;
- Revêtement du substrat par un procédé de pulvérisation thermique, de préférence par un procédé HVOF utilisant la poudre de pulvérisation.
